(19) Europäisches Patentamt
European Patent Office
Office européen des brevets

(11) EP 3 978 829 A1

(12) EUROPEAN PATENT APPLICATION
published in accordance with Art. 153(4) EPC

(43) Date of publication:
06.04.2022 Bulletin 2022/14

(51) International Patent Classification (IPC):
F25B 1/00 (2006.01)    F04B 39/02 (2006.01)
F25B 31/02 (2006.01)

(21) Application number: 19931481.6

(22) Date of filing: 31.05.2019

(52) Cooperative Patent Classification (CPC):
F04B 39/02; F25B 1/00; F25B 31/02

(86) International application number:
PCT/JP2019/021835

(87) International publication number:
WO 2020/240858 (03.12.2020 Gazette 2020/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MITSUBISHI ELECTRIC
CORPORATION
Chiyoda-ku
Tokyo 100-8310 (JP)

(72) Inventors:
• ISHIKAWA, Tomotaka
Tokyo 100-8310 (JP)
• ONO, Hideki
Tokyo 100-8310 (JP)

(74) Representative: Pfenning, Meinig & Partner mbB
Patent- und Rechtsanwälte
Theresienhöhe 11a
80339 München (DE)

(54) REFRIGERATION CYCLE DEVICE AND REFRIGERATOR

(57) A refrigeration cycle apparatus (1) comprises a refrigerant circuit in which a carbon dioxide-containing refrigerant circulates to flow through a compressor (10), a condenser (20), an expansion valve (50) and an evaporator (60), and thus return to the compressor (10). A miscible oil is enclosed in the refrigerant circuit as a refrigeration oil, the miscible oil having miscibility with the refrigerant. An enclosed amount of the miscible oil is equal to or more than an amount by which at least a portion of a rotor of a motor is immersed in the miscible oil inside the casing of the compressor (10). Preferably, the enclosed amount of the miscible oil is larger than the spatial volume of the compressor (10).

FIG.1

EP 3 978 829 A1

**Description**

TECHNICAL FIELD

The present invention relates to a refrigeration cycle apparatus and a refrigerator.

BACKGROUND ART

WO 2002/095302 discloses a refrigeration cycle apparatus using carbon dioxide as a main refrigerant.

CITATION LIST

PATENT LITERATURE

PTL 1: WO 2002/095302

SUMMARY OF INVENTION

TECHNICAL PROBLEM

In recent years, a natural refrigerant such as carbon dioxide has attracted attention as refrigerant. When refrigerant which does not contain carbon dioxide is used in an appropriate amount, the refrigerant flows through a flow path pipe of an evaporator in a flow regime referred to as an annular flow which forms a liquid film on an internal wall surface of a heat transfer tube. In contrast, a non-azeotropic mixed refrigerant containing carbon dioxide (R463A, etc.) has a low boiling point and tends to evaporate. Accordingly, when a refrigeration cycle apparatus uses the non-azeotropic mixture refrigerant containing carbon dioxide, with an evaporator having liquid refrigerant in a small amount at a low flow velocity, a heat transfer tube has liquid film disappearing at a low degree of dryness of about 0.8 in an evaporation process. Hereinafter, such a state with liquid film disappearing will be referred to as a dry-out state.

In the dry-out state, no liquid film is formed on the internal wall surface of the heat transfer tube, and a two-phase refrigerant flows through the heat transfer tube in a mist flow with droplets mixed therein. When heat transfer performance when heat is transferred from a gas refrigerant to a pipe is compared with heat transfer performance when heat is transferred from a liquid refrigerant to the pipe, the former deteriorates to 1/100 to 1/1000 of the latter. Therefore, when the evaporator has an increased dry-out area, the evaporator has a significantly reduced heat transfer performance.

When the evaporator has a reduced heat transfer performance, refrigerant would be sent to the compressor in a mist flow with a low degree of dryness, and there is a possibility of failing to ensure a degree of superheat (SH) for the refrigerant at the inlet of the compressor. Accordingly, liquid compression may occur in the compressor.

The present invention has been made in order to solve such a problem as described above, and an object of the present invention is to provide a refrigeration cycle apparatus and refrigerator configured to use a carbon dioxide-containing refrigerant and facilitate ensuring a degree of superheat for refrigerant at an inlet of a compressor.

SOLUTION TO PROBLEM

The presently disclosed refrigeration cycle apparatus comprises: a refrigerant circuit in which a carbon dioxide-containing refrigerant circulates to flow through a compressor, a condenser, an expansion valve and an evaporator, and return to the compressor. A miscible oil is enclosed in the refrigerant circuit as a refrigeration oil, the miscible oil having miscibility with the refrigerant. The compressor has a motor inside a casing of the compressor. An enclosed amount of the miscible oil is equal to or more than an amount by which at least a portion of a rotor of the motor is immersed in the miscible oil inside the casing of the compressor.

ADVANTAGEOUS EFFECTS OF INVENTION

When the presently disclosed refrigeration cycle apparatus and refrigerator use a carbon dioxide-containing refrigerant, with an evaporator having a liquid refrigerant therein in an amount which is small to some extent, it still prevents the refrigerant from evaporating, as the liquid refrigerant contains miscible oil at a high ratio.

Accordingly, a dry-out state is less likely to occur, and a degree of superheat is ensured at the inlet of the compressor.

BRIEF DESCRIPTION OF DRAWINGS

Fig. 1 shows a general configuration of a refrigeration cycle apparatus according to an embodiment of the present disclosure.

Fig. 2 is a diagram schematically showing a cross section of a heat transfer tube of an evaporator when R410A is used as refrigerant.

Fig. 3 is a diagram schematically showing the cross section of the heat transfer tube of the evaporator when R463A is used as refrigerant.

Fig. 4 is a diagram for illustrating an amount of miscible oil enclosed in the refrigeration cycle apparatus according to the present embodiment.

Fig. 5 is a diagram schematically showing the cross section of the heat transfer tube of the evaporator when R463A is used as refrigerant in the present embodiment.

Fig. 6 is a diagram showing a cross section of a smooth tube 60a.

Fig. 7 is a diagram showing a cross section of a fluted tube 60b.

Fig. 8 is a partial enlarged view of the cross section of fluted tube 60b.

Fig. 9 is a Baker chart showing a relationship between degree of dryness and flow velocity.

DESCRIPTION OF EMBODIMENTS

Hereinafter, embodiments of the present invention will be described in detail with reference to the drawings. Hereinafter, while a plurality of embodiments will be described, the configurations described in the embodiments are intended to be combined together, as appropriate, in the present application as originally filed. In the figures, identical or corresponding components are identically denoted and will not be described redundantly.

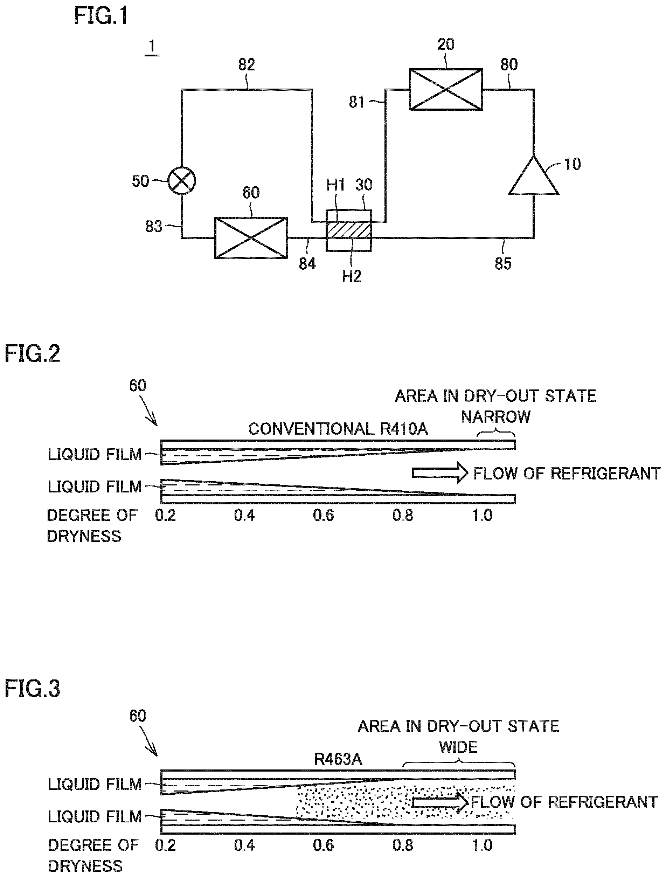

Fig. 1 generally shows a configuration of a refrigeration cycle apparatus according to an embodiment of the present disclosure. It should be noted that Fig. 1 functionally shows how each component in the refrigeration cycle apparatus is connected and arranged, and the figure does not necessarily show arrangement in a physical space.

Referring to Fig. 1, a refrigeration cycle apparatus 1 includes a compressor 10, a condenser 20, a heat exchanger 30, an expansion valve 50, an evaporator 60, and pipes 81 to 85. For simplicity of illustration, Fig. 1 shows a refrigerant circuit of a simple refrigeration cycle apparatus in which refrigerant flows through compressor 10, condenser 20, heat exchanger 30, expansion valve 50, and evaporator 60 in this order and returns to compressor 10. As the refrigerant is used a carbon dioxide (hereinafter referred to as $CO_2$)-containing refrigerant, e.g., a non-azeotropic mixed refrigerant of R463A.

Compressor 10 suctions refrigerant from pipe 85, compresses the suctioned refrigerant, and discharges the compressed refrigerant to pipe 80. Compressor 10 is configured to be adjusted in rotational speed in response to a control signal received from a control device (not shown). Adjusting compressor 10 in rotational speed adjusts an amount of refrigerant circulated, and hence refrigeration cycle apparatus 1 in performance. Compressor 10 may be of various types, and, for example, while representatively it may be of a scroll type, it can also be of a rotary type, a reciprocating type, or a screw type.

Condenser 20 receives refrigerant discharged from compressor 10 to pipe 80, condenses the received refrigerant, and passes the condensed refrigerant to pipe 81. Condenser 20 is configured such that high-temperature and high-pressure gas refrigerant discharged from compressor 10 exchanges heat with external air. Through this heat exchange, the refrigerant dissipates heat, and accordingly, the refrigerant is condensed into a liquid phase. A fan (not shown) supplies condenser 20 with external air with which the refrigerant exchanges heat. Adjusting the fan in rotational speed can adjust the refrigerant in pressure on the discharging side of compressor 10.

Liquid refrigerant flowing out of condenser 20 flows to expansion valve 50 through pipe 81, a first passage H1 of heat exchanger 30, and pipe 82. Expansion valve 50 decompresses the liquid refrigerant into a two-phase refrigerant. Evaporator 60 receives the two-phase refrigerant flowing in from pipe 83 and evaporates it to be a gas refrigerant. The gas refrigerant flowing out of evaporator 60 returns to the inlet of compressor 10 via pipe 84, a second passage H2 of the heat exchanger, and pipe 85. Expansion valve 50 is controlled such that the refrigerant at the outlet of evaporator 60 to be suctioned into compressor 10 has a degree of superheat of about 5 K.

Heat exchanger 30 has first passage H1 and second passage H2, and is configured to exchange heat between refrigerant flowing through first passage H1 and refrigerant flowing through second passage H2.

Fig. 2 is a diagram schematically showing a cross section of a heat transfer tube of evaporator 60 when R410A is used as refrigerant. A conventional refrigeration apparatus uses refrigerant of a simple substance, an azeotropic refrigerant (R22, R410A, R404A, etc.), or a non-azeotropic refrigerant (R407C, etc.) which does not contain $CO_2$. As shown in Fig. 2, when R410A is used, evaporator 60 has a dry-out area in a range of a degree of dryness of 0.9 to 1.0 and hence in a small area. Accordingly, evaporator 60 has an area of 90% or more thereof with a two-phase refrigerant flowing therethrough in an annular flow, and thus presents satisfactory heat transfer performance between the refrigerant and the heat transfer tube.

Fig. 3 is a diagram schematically showing the cross section of the heat transfer tube of evaporator 60 when R463A is used as refrigerant. R463A is a non-azeotropic mixed refrigerant containing $CO_2$, and has a boiling point lower than that of R410A and thus easily evaporates. When R463A is used, evaporator 60 has a dry-out state from a portion having a degree of dryness of about 0.8. Thus, when R463A is compared with R410A, the former enters a dry-out state from a portion having a degree of dryness lower by about 10% than the latter. Thus, evaporator 60 has an increased dry-out area resulting in reduced heat transfer performance. Further, when expansion valve 50 is controlled such that the refrigerant at the outlet of evaporator 60 to be suctioned into compressor 10 has a degree of superheat of about 5 K, evaporator 60 has a significantly decreased evaporation temperature, resulting in poor energy-saving performance.

Accordingly, in the present embodiment, by inhibiting evaporation of $CO_2$ or helping to form a liquid film of a two-phase refrigerant on the wall surface of the heat transfer tube, or the like, evaporator 60 is prevented from having the heat transfer tube in a dry-out state. To do so, miscible oil soluble in refrigerant is used as refrigerator oil. When miscible oil, which is non-volatile oil, is dissolved in refrigerant, the refrigerant has a raised boiling point, and even when the refrigerant receives heat, the refrigerant is resistant to evaporation, which suppresses a dry-out state of the heat transfer tube. In order to circulate the miscible oil through the refrigerant circuit, it is preferable that no oil separator be provided at a discharging piped portion of compressor 10, as shown in Fig. 1.

Even when the heat transfer tube has a dry-out state and evaporator 60 has reduced heat transfer performance, heat exchanger 30 heats the refrigerant flowing out of evaporator 60 so that a sufficient degree of superheat is obtained at the inlet of compressor 10. When the heat transfer tube has a dry-out state and evaporator 60 has reduced heat transfer performance, and a degree of superheat cannot be ensured for refrigerant, then, by heat exchanger 30, refrigerant flowing out of evaporator 60 and passing through second passage H2 is heated with a liquid refrigerant of high temperature passing through first passage H1. Thus, even when evaporator 60 has an area dried out and thus having reduced heat transfer performance, the refrigerant can subsequently be heated, and a degree of superheat can be ensured at the inlet of compressor 10.

Enclosing the miscible oil in a larger amount is better for preventing evaporator 60 from having a portion in the dry-out state. When the miscible oil is enclosed in an amount equal to or larger than that of oil held by a typical compressor, it increases an oil circulation rate in the refrigerant circuit, and the liquid refrigerant in evaporator 60 is more resistant to evaporation.

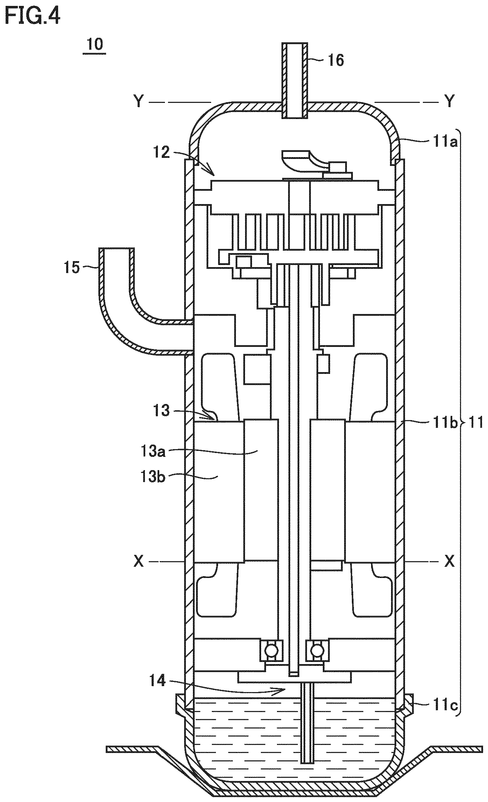

Fig. 4 is a diagram for illustrating an amount of miscible oil enclosed in the refrigeration cycle apparatus according to the present embodiment. As shown in Fig. 4, compressor 10 has an outer shell composed of a sealed container 11. Sealed container 11 includes, for example, an upper case 11a, a barrel portion 11b, and a lower case 11c. Upper case 11a is a member constituting an upper portion of sealed container 11. Barrel portion 11b is a member constituting a central portion of sealed container 11. Lower case 11c is a member constituting a lower portion of sealed container 11.

Upper case 11a is, for example, a hemispherical member, and constitutes a part of sealed container 11 constituting the outer shell of compressor 10 of a sealed type.

A discharging pipe 16 for discharging the refrigerant is provided at a top of upper case 11a which is a center in plan view, and is connected to pipe 80 shown in Fig. 1.

Sealed container 11 houses an oil pump 14, a motor 13, and a scroll type compression unit 12 as contents. Scroll type compression unit 12, motor 13, and oil pump 14 are disposed successively in this order from the top to the bottom of sealed container 11. A suction pipe 15 for suctioning the refrigerant is attached to a portion of barrel portion 11b between scroll type compression unit 12 and motor 13. Suction pipe 15 is connected to pipe 85 shown in Fig. 1.

Motor 13 includes a rotor 13a and a stator 13b. In general, refrigerator oil is enclosed in an amount that does not immerse rotor 13a in order to reduce resistance against rotation for motor 13. In the present embodiment, however, refrigeration cycle apparatus 1 encloses miscible oil in an amount equal to or larger than a level corresponding to a lower surface of rotor 13a as indicated in Fig. 4 by X-X. More preferably, refrigeration cycle apparatus 1 encloses miscible oil in an amount equal to or larger than a level corresponding to an upper surface of sealed container 11 as indicated in Fig. 4 by Y-Y. When the miscible oil is enclosed in the amount equal to or larger than the level corresponding to the upper surface of sealed container 11 as indicated in Fig. 4 by Y-Y, and the enclosed miscible oil fills sealed container 11, the enclosed miscible oil spills out of sealed container 11. Since the miscible oil dissolves in the refrigerant, the miscible oil is discharged from compressor 10 together with the refrigerant, and circulates through the refrigerant circuit while refrigeration cycle apparatus 1 is in operation.

While in general it is preferable that compressor 10 avoid liquid compression, the miscible oil, which is liquid, may fill sealed container 11 insofar as the miscible oil does so for a short period of time before the miscible oil is delivered out, such as when starting the apparatus or the like. For example, it is preferable to operate compressor 10 at a lower rotational speed than in normal operation in order to avoid damage to compressor 10 due to liquid compression for a prescribed period of time (of about 3 minutes) immediately after it is actuated. Note that levels X-X and Y-Y are a guide indicating an amount of miscible oil enclosed in a refrigeration cycle, and it is not a requirement that compressor 10 reserves miscible oil in an amount equal to or larger than level X-X or Y-Y when the apparatus is started, and the enclosed miscible oil may be dispersed in condenser 20, evaporator 60, and the like.

While refrigeration cycle apparatus 1 is in operation, in order to reduce resistance against rotation, it is preferable that compressor 10 reserves miscible oil therein in an amount such that rotor 13a is not immersed in the miscible oil.

As has been discussed above, in the present embodiment, refrigeration cycle apparatus 1 encloses miscible oil in an amount equal to or more than an amount by which at least a portion of rotor 13a of motor 13 is immersed in the miscible oil inside sealed container 11 serving as a casing of compressor 10.

Preferably, the enclosed amount of the miscible oil is larger than a spatial volume of compressor 10. Note that the spatial volume of compressor 10 is an internal volume of sealed container 11 serving as the casing of compressor 10 minus a volume of its contents, i.e., motor 13, scroll type compression unit 12, oil pump 14 and the like.

More preferably, in refrigeration cycle apparatus 1 of the present embodiment, evaporator 60 includes a smooth tube and a fluted tube. When evaporator 60 has a heat transfer tube that is a smooth tube, it has a small effect in agitating refrigerant, which reduces an amount of heat received by the $CO_2$ in the mixed refrigerant and can delay evaporation. In contrast, when a heat transfer tube of evaporator 60 in a range of a high degree of dryness of 0.8 or more is an internally fluted tube, surface tension helps to form liquid film on the internal wall of the tube, and the tube is thus resistant to a dry-out state.

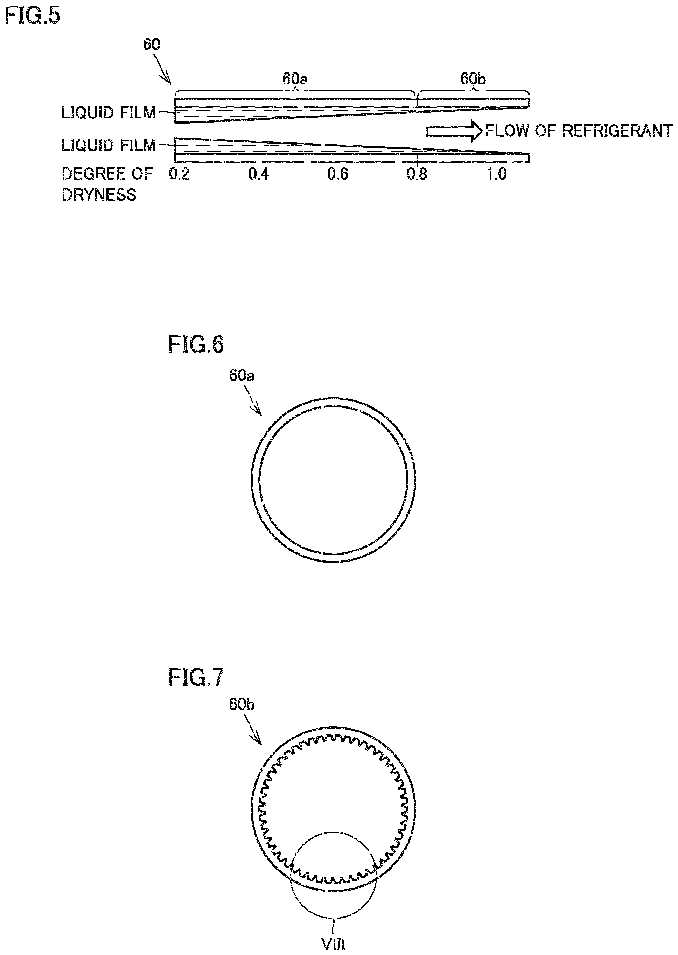

Fig. 5 is a diagram schematically showing the cross section of the heat transfer tube of evaporator 60 when R463A is used as refrigerant in the present embodiment. Referring to Fig. 5, evaporator 60 includes a smooth tube 60a and a fluted tube 60b.

Fig. 6 is a cross section of smooth tube 60a. In refrigeration cycle apparatus 1 of the present embodiment, evaporator 60 includes smooth tube 60a. Smooth tube 60a has an unfluted internal wall surface. In an area of a low degree of dryness of less than 0.8 which is not in a dry-out state, a smooth tube having no agitation effect therein delays evaporation of $CO_2$ more than a fluted tube does. Therefore, in an upstream area of evaporator 60, smooth tube 60a is used as a heat transfer tube to reduce an area of a dry-out state.

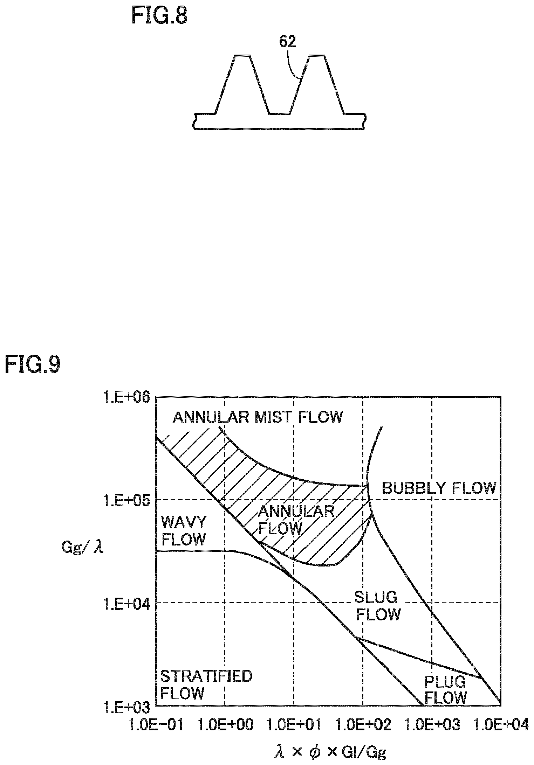

Fig. 7 shows a cross section of fluted tube 60b. Fig. 8 is a partial enlarged view of the cross section of fluted tube 60b. Preferably, evaporator 60 further includes fluted tube 60b in addition to smooth tube 60a. Fluted tube 60b has an internal wall surface fluted 62. Fluted tube 60b is provided downstream of smooth tube 60a. For an area having a degree of dryness of 0.8 or more, a flute allowing surface tension to be caused to help to form liquid film is more advantageous in suppression of a dry-out state than the flute's agitation effect resulting in evaporation. Therefore, as shown in Fig. 5, it is preferable to arrange smooth tube 60a in an upstream portion having a thick liquid film, and fluted tube 60b in a downstream portion having a reduced liquid film.

Further, in order to improve heat transfer performance in evaporator 60, it is preferable in the present embodiment to pass refrigerant through evaporator 60 at a flow velocity falling within some range to help to form a liquid film in the heat transfer tube. When the refrigerant has a flow velocity set in some range to attain an annular flow even in the portion of the area of a high degree of dryness of 0.8 or more, evaporator 60 can have a heat transfer tube having an internal wall with liquid film formed thereon.

A two-phase flow regime for degree of dryness and flow velocity is represented in Baker chart. Fig. 9 is a Baker chart representing a relationship between degree of dryness and flow velocity. The Baker chart shown in Fig. 9 is a characteristic diagram representing a flow regime of refrigerant in a gas-liquid two-phase state. The vertical axis and the horizontal axis each represent a value representing a flowing state of refrigerant, and the vertical axis is $Gg/\lambda$ and the horizontal axis is $\lambda \times \varphi \times Gl/Gg$. The vertical axis corresponds to a magnitude of a mass velocity of a gas phase of refrigerant. In the figure, the refrigerant has a gas phase with larger mass velocities for upper sides. The horizontal axis corresponds to a ratio in mass velocity of the gas phase and the liquid phase of the refrigerant, that is, a degree of dryness. In the figure, the degree of dryness decreases toward the right side.

Note that $\lambda$ and $\varphi$ are parameters represented in the following expressions (1) and (2), respectively. Symbols in the expressions and figure are G: refrigerant's mass velocity [kg/(m$^2$ · h)], $\rho$: density, $\mu$: viscosity, and $\sigma$: surface tension. Each symbol's subscripts are g: refrigerant's gas phase, 1: refrigerant's liquid phase, w: water, and a: air.

$$\lambda = \{(\rho g/\rho a) \times (\rho l/\rho w)\}^{1/2} \qquad \qquad \text{... (1)}$$

$$\varphi = (\sigma l/\sigma w)^{1/4} \times \{(\mu l/\mu w) \times (\rho l/\rho w)^2\}^{1/3} \qquad \qquad \text{... (2)}$$

Controlling a flow rate to fall within an annular flow range in a vicinity of $Gg/\lambda$ of 1.E + 0.5 and $\lambda \times \varphi \times Gl/Gg$ of 1.0E + 01, as indicated in Fig. 9 by a hatched area, helps to form liquid film in evaporator 60 and hence further improves evaporator 60 in heat transfer performance.

It should be understood that the embodiments disclosed herein have been described for the purpose of illustration only and in a non-restrictive manner in any respect. The scope of the present invention is defined by the terms of the claims, rather than the embodiments description above, and is intended to include any modifications within the meaning and scope equivalent to the terms of the claims.

REFERENCE SIGNS LIST

1 refrigeration cycle apparatus, 11a upper case, 10 compressor, 11 sealed container, 11b barrel portion, 11c lower case, 12 scroll type compression unit, 13 motor, 13a stator, 13b rotor, 14 oil pump, 15 suction pipe, 16 discharging pipe, 20 condenser, 30 heat exchanger, 50 expansion valve, 60 evaporator, 60a smooth tube, 60b fluted tube, 80, 81, 82, 83, 84 and 85 pipe, HI first passage, H2 second passage.

**Claims**

1. A refrigeration cycle apparatus comprising:

    a refrigerant circuit in which a carbon dioxide-containing refrigerant circulates to flow through a compressor, a condenser, an expansion valve, and an evaporator and return to the compressor,
    a miscible oil being enclosed in the refrigerant circuit as a refrigeration oil, the miscible oil having miscibility with the refrigerant,
    the compressor having a motor inside a casing of the compressor,
    an enclosed amount of the miscible oil being equal to or more than an amount by which at least a portion of a rotor of the motor is immersed in the miscible oil inside the casing of the compressor.

2. The refrigeration cycle apparatus according to claim 1, wherein the enclosed amount of the miscible oil is larger than a spatial volume of the compressor.

3. The refrigeration cycle apparatus according to claim 1 or 2, wherein the evaporator includes a smooth tube having an unfluted internal wall surface.

4. The refrigeration cycle apparatus according to claim 3, wherein the evaporator incudes downstream of the smooth tube a fluted tube having a fluted internal wall surface.

5. The refrigeration cycle apparatus according to claim 1, wherein a flow velocity of the refrigerant in the evaporator is a flow velocity allowing an annular flow to be maintained.

6. The refrigeration cycle apparatus according to claim 1, further comprising a heat exchanger configured to exchange heat between the refrigerant flowing out of the condenser and the refrigerant flowing out of the evaporator.

7. A refrigerator comprising the refrigeration cycle apparatus according to any one of claims 1 to 6.

## FIG.1

## FIG.2

## FIG.3

FIG.4

## FIG.5

## FIG.6

## FIG.7

FIG.8

FIG.9

**INTERNATIONAL SEARCH REPORT**

International application No.

PCT/JP2019/021835

**A. CLASSIFICATION OF SUBJECT MATTER**
Int.Cl. F25B1/00(2006.01)i, F04B39/02(2006.01)i, F25B31/02(2006.01)i

According to International Patent Classification (IPC) or to both national classification and IPC

**B. FIELDS SEARCHED**

Minimum documentation searched (classification system followed by classification symbols)
Int.Cl. F25B1/00, F04B39/02, F25B31/02

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 02/095302 A1 (MATSUSHITA ELECTRIC INDUSTRIAL CO., LTD.) 28 November 2002, specification, page 5, line 1 to page 12, line 11, fig. 1 & US 2004/0206109 A1, paragraphs [0030]-[0075], fig. 1 & EP 1389721 A1 & KR 10-2004-0036874 A & CN 1526061 A | 1-7 |
| Y | JP 2619714 B2 (COPELAND CORP.) 11 June 1997, column 5, line 2 to column 8, line 24, fig. 1-4 & US 4895496 A, column 1, line 6 to column 4, line 9, fig. 1-4 & EP 345919 A2 & MX 168015 B & AU 3079989 A & BR 8902667 A & IN 170869 A & PH 26207 A & KR 10-0146703 B & CN 1038860 A | 1-7 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 June 2019 (24.06.2019) | 13 August 2019 (13.08.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

<div align="center">**INTERNATIONAL SEARCH REPORT**</div>

| International application No. |
| --- |
| PCT/JP2019/021835 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2014-119242 A (MITSUBISHI ELECTRIC CORP.) 30 June 2014, paragraphs [0002]-[0073], fig. 1-6 (Family: none) | 1-7 |
| Y | JP 2-143094 A (KOBE STEEL, LTD.) 01 June 1990, page 2, lower right column, line 14 to page 4, upper left column, line 11, fig. 1 (Family: none) | 3-4,7 |
| Y | JP 5943206 B2 (HITACHI APPLIANCES, INC.) 29 June 2016, paragraphs [0030]-[0066], fig. 5-6 & CN 104165458 A & KR 10-2014-0135586 A | 5,7 |
| A | JP 2007-315639 A (MATSUSHITA ELECTRIC INDUSTRIAL CO., LTD.) 06 December 2007, paragraphs [0031]-[0033] (Family: none) | 1-7 |
| A | JP 2008-20166 A (KOBELCO & MATERIALS COPPER TUBE CO., LTD.) 31 January 2008, paragraphs [0023]-[0024], [0057] (Family: none) | 1-7 |

Form PCT/ISA/210 (continuation of second sheet) (January 2015)

## REFERENCES CITED IN THE DESCRIPTION

**Patent documents cited in the description**

- WO 2002095302 A